# EUROPEAN PATENT APPLICATION

(11) **EP 2 077 669 A2**
(43) Date of publication of application: **08.07.2009**
(21) Application number: 08012515.6
(22) Date of filing: 10.07.2008
(51) Int. Cl.: H04N 7/26, H04N 7/50, H04N 7/64, H04N 7/24

(54) **Transcoder and receiver**

(30) Priority: 07.01.2008 JP 2008000502
(71) Applicant: MITSUBISHI ELECTRIC CORPORATION, Chiyoda-ku Tokyo 100-8310 (JP)
(72) Inventor: Yokosato, Junichi, Tokyo 100-8310 (JP); Maeda, Shinji, Tokyo 100-8310 (JP)
(74) Representative: Pfenning, Meinig & Partner GbR

(57) **Abstract**

An error extracting unit (7) detects that an error has occurred in a medium stream received, and determines the position of the occurrence. An error specific information adding unit (13) adds error specific information indicating that the error has occurred before the transcoding to an access unit on which the transcoding has been performed, the access unit corresponding to the medium stream in which the error has occurred at the time of the reception.

## Description

### Field of the Invention

The present invention relates to a transcoder which transcodes a medium stream which the transcoder has received from a network and which sends out the transcoded medium stream to another network, and a receiver which receives a medium stream from this transcoder.

### Background of the Invention

A conventional transcoder, even when an error or a loss occurs in a received bit stream, decodes the bit stream in a state in which an error or a loss has occurred in the bit stream, and encodes the decoded bit stream again by using either a different coding method or different parameters and sends out the coded bit stream to a network. For example, a transcoder disclosed by patent reference 1 decodes received video data temporarily and encodes them by using different encoding parameters. In this case, if an error occurs in the received stream at the time when the transcoder decodes the received data to generate video data in a baseband, fluctuations occur in the video image. The transcoder encodes this video data having fluctuations again and sends out this coded video data to a receiver. Even though the video stream itself does not include any error, when the receiver which plays back this video stream decodes the video stream, the video image which is displayed by the receiver has fluctuations.

For example, even in a case in which the receiver is set up in such a way as to, when the video data have an error and fluctuations occur in the video image, display a black picture without displaying the video image and start a playback of the video image again when the next I picture arrives, the receiver displays the video image having fluctuations, just as they are, because the received video data do not include any network errors and the syntax is normal. Because errors have not necessarily occurred even when the receiver continues displaying the video image having fluctuations, the receiver cannot display any message about the fluctuations of the video image for the user.

Furthermore, a transcoder shown in, for example, patent reference 2, when received medium data have an error, transmits data for enabling a terminal to perform error concealment processing on the medium data to the terminal. More specifically, the transcoder inserts medium coded data for enabling the terminal to carry out the error concealment processing into a position where an error has occurred into the medium data, and transmits this medium data. In this case, the error concealment processing is effective when the inserted data for error concealment are played back without causing the user to have the sense of incongruity. However, because the stream itself which the receiver has received is correct even when the receiver enters a playback state in which the user can recognize the occurrence of the error, the receiver cannot detect any fluctuations in the video image currently being played back. Therefore, even in a case in which the receiver is set up in such a way as to, when fluctuations occur in the video image, display a black picture without displaying the video image and start a playback of the video image again when the next I picture arrives, the receiver displays the video image having fluctuations, just as they are. Similarly, even when the video image continues to have fluctuations continuously, the receiver cannot display any message for notifying the user that an error has occurred.
[Patent reference 1] WO No. 00/48402
[Patent reference 2] WO No. 05/34447

A problem with conventional transcoders is therefore that because no error has occurred in medium data transcoded even when an error occurs in the medium data when received, the receiver which has received the medium data cannot detect that fluctuations have occurred in the video or the audio.

### SUMMARY OF THE INVENTION

The present invention is made in order to solve the above-mentioned problem, and it is therefore an object of the present invention to provide a transcoder which makes it possible for a receiver to detect that medium data have abnormalities, and to carry out display of a message for the user, replacement of the medium having fluctuations with another image, and so on.

In accordance with the present invention, there is provided a transcoder including: an error extracting unit for detecting occurrence of an error in a medium stream received, and for determining a position of the occurrence; and an error specific information adding unit for adding error specific information indicating that the error has occurred before the transcoding to an access unit on which the transcoding has been performed, the access unit corresponding to the medium stream in which the error has occurred at a time of the reception. Advantages of the Invention

Because the transcoder in accordance with the present invention adds error specific information indicating that an error has occurred before the transcoding to an access unit on which the transcoding has been performed, the access unit corresponding to the medium stream in which the error has occurred at the time of the reception, the transcoder makes it possible for a receiver to detect that the medium data have abnormalities and to carry out display of a message for the user, replacement of the medium having fluctuations with another image, and so on.

Further objects and advantages of the present invention will be apparent from the following description of the preferred embodiments of the invention as illustrated in the accompanying drawings.

### BRIEF DESCRIPTION OF THE DRAWINGS

### Brief Description of the Figures

Fig. 1 is a block diagram showing a transcoder in accordance with Embodiment 1 of the present invention;
Fig. 2 is an explanatory drawing showing error information of the transcoder in accordance with Embodiment 1 of the present invention;
Fig. 3 is a flow chart of a process of detecting a loss of packets of the transcoder in accordance with Embodiment 1 of the present invention;
Fig. 4 is a flow chart of a process of setting up the error information of the transcoder in accordance with Embodiment 1 of the present invention;
Fig. 5 is a block diagram showing a variant of the transcoder in accordance with Embodiment 1 of the present invention;
Fig. 6 is an explanatory drawing showing a variant of the error information of the transcoder in accordance with Embodiment 1 of the present invention;
Fig. 7 is a block diagram showing another variant of the transcoder in accordance with Embodiment 1 of the present invention;
Fig. 8 is an explanatory drawing showing another variant of the error information of the transcoder in accordance with Embodiment 1 of the present invention;
Fig. 9 is a block diagram of a network system to which a transcoder in accordance with Embodiment 2 of the present invention is connected;
Fig. 10 is a block diagram showing the transcoder in accordance with Embodiment 2 of the present invention;
Fig. 11 is an explanatory drawing showing the location of storage of error information of the transcoder in accordance with Embodiment 2 of the present invention;
Fig. 12 is an explanatory drawing showing the error information at a time of detecting occurrence of an error in the transcoder in accordance with Embodiment 2 of the present invention;
Fig. 13 is a block diagram of a transcoder in accordance with Embodiment 3 of the present invention;
Fig. 14 is a block diagram of a transcoder in accordance with Embodiment 4 of the present invention;
Fig. 15 is a block diagram of a receiver in accordance with Embodiment 5 of the present invention;
Fig. 16 is an explanatory drawing showing error information of a transcoder in accordance with Embodiment 5 of the present invention;
Fig. 17 is a block diagram showing a variant of the receiver in accordance with Embodiment 5 of the present invention;
Fig. 18 is a block diagram showing a receiver in accordance with Embodiment 6 of the present invention;
Fig. 19 is a block diagram of a transcoder in accordance with Embodiment 6 of the present invention; and
Fig. 20 is an explanatory drawing showing data about a setting of the location of addition of the transcoder in accordance with Embodiment 6 of the present invention.

### DETAILED DESCRIPTION OF THE PREFERRED EMBODIMENTS

### Embodiment 1.

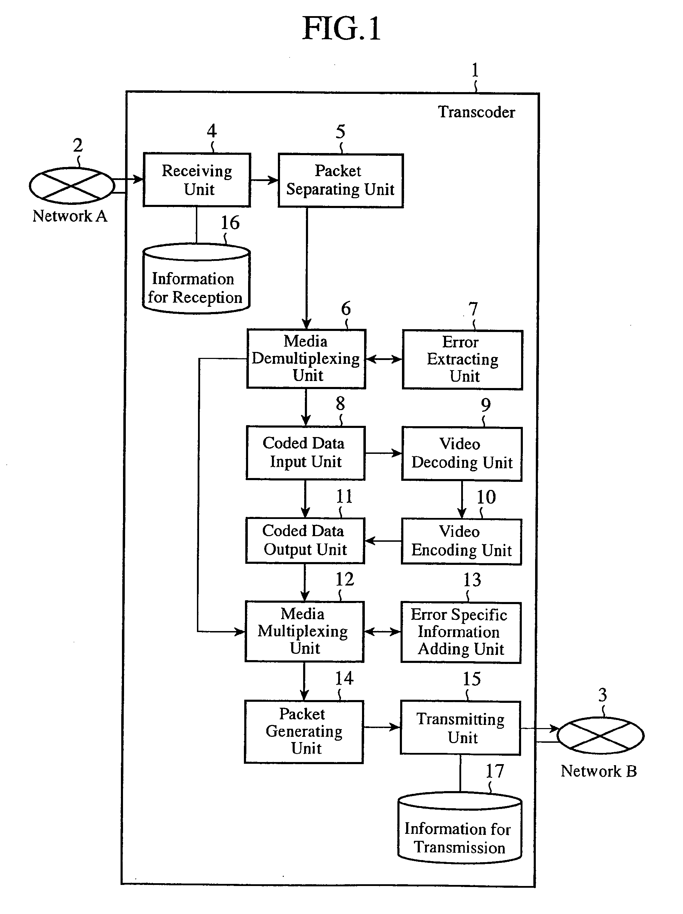

Fig. 1 is a block diagram showing a transcoder in accordance with Embodiment 1 of the present invention. It is assumed that the transcoder 1 in accordance with Embodiment 1 is connected to both an IP network (A) 2 which is one network and another IP network (B) 3 which is another network. In this case, the IP network (A) 2 and the other IP network (B) 3 can be an identical network or can be different networks. Video stream data which the transcoder 1 transmits or receives are a stream in which MPEG-2 TS (Transport Stream) packets are stored in the payload of RTP (Real-time Transport Protocol) packets (RFC3550), and, as a method of storing MPEG-2 TS packets in the payload of RTP packets, for example, a method of storing MPEG-2 TS packets which are defined in RFC2250 in RTP packets can be used. The transcoder 1 can convert an MPEG-2 video coded stream which the transcoder has received into an H.264 video coded stream. In this embodiment, although an explanation of the transcoder will be made by assuming that neither the frame rate nor the resolution changes before and behind the transcoding is performed on the input video coded stream, the present invention is not limited to this assumption.

The transcoder 1 shown in Fig. 1 is provided with a receiving unit 4, a packet separating unit 5, a media demultiplexing unit 6, an error extracting unit 7, a coded data input unit 8, a video decoding unit 9, a video encoding unit 10, a coded data output unit 11, a media multiplexing unit 12, an error specific information adding unit 13, a packet generating unit 14, a transmitting unit 15, information for reception 16, and information for transmission 17. The receiving unit 4 is a functional unit which uses a source address and a port number which are described in the information for reception 16 so as to receive packets from the network (A) 2, and which performs processing for both an IP (Internet Protocol) layer and a UDP (User Datagram Protocol) layer. When an error of a packet is detected in the UDP layer, the receiving unit 4 discards the packet, and, in the subsequent processes, carries out the same handling as that performed in the case of a packet loss. The receiving unit 4 extracts an RTP packet stored in the payload of the UDP and transfers the RTP packet to the packet separating unit 5. When receiving the RTP packet, the packet separating unit 5 performs buffering of a fixed amount of RTP packets including the RTP packet in order to absorb jitter which occurs in the IP network. At that time, if those RTP packets are received out of order, the packet separating unit 5 sorts the out-of-order packets in the correct order using their RTP sequence numbers. After completing the buffering, the packet separating unit 5 deletes their RTP headers and extracts the TS stream stored in the payload of the RTP packets. The extracted TS stream is transferred to the media demultiplexing unit 6.

The media demultiplexing unit 6 demultiplexes the received TS packets into TS packets of plural media types. When demultiplexing the received TS packets into TS packets of plural media types, the media demultiplexing unit 6 calls up the error extracting unit 7 for each of the TS packets so as to check to see whether an error has occurred in each of the TS packets. In this embodiment, because an error which occurs in a TS packet takes the form of a packet loss, the error extracting unit 7 checks a PID (a packet ID) and continuity_counter which exist in the header of each TS packet, and then checks the continuity of the continuity_counters of TS packets of the same PID. When there exists a TS packet having a PID for which the continuity of the corresponding continuity_counter is impaired, the error extracting unit 7 judges that a packet loss has occurred at the TS packet and sends the TS packet back to the media demultiplexing unit 6 by inserting information indicating that a packet loss has occurred in TS packets of the same PID before the head of the TS packet. The media demultiplexing unit 6 which has received the results of the error extraction from the error extracting unit 7 demultiplexes the TS packets into TS packets of plural media types so as to generate PES (Packetized Elementary Stream) packets, and, in a case in which the TS stream is a video stream, further extracts MPEG-2 video ES (Elementary Stream) data from each PES packet. The media demultiplexing unit 6 also splits the video ES data into data about pictures, and sets a picture ID to each of the pictures. The media demultiplexing unit 6 then generates, as error information, data indicating a position where a packet loss has occurred for a picture to which the data about the payload of a TS packet for which a notification of occurrence of an error has been made by the error extracting unit 7 belong.

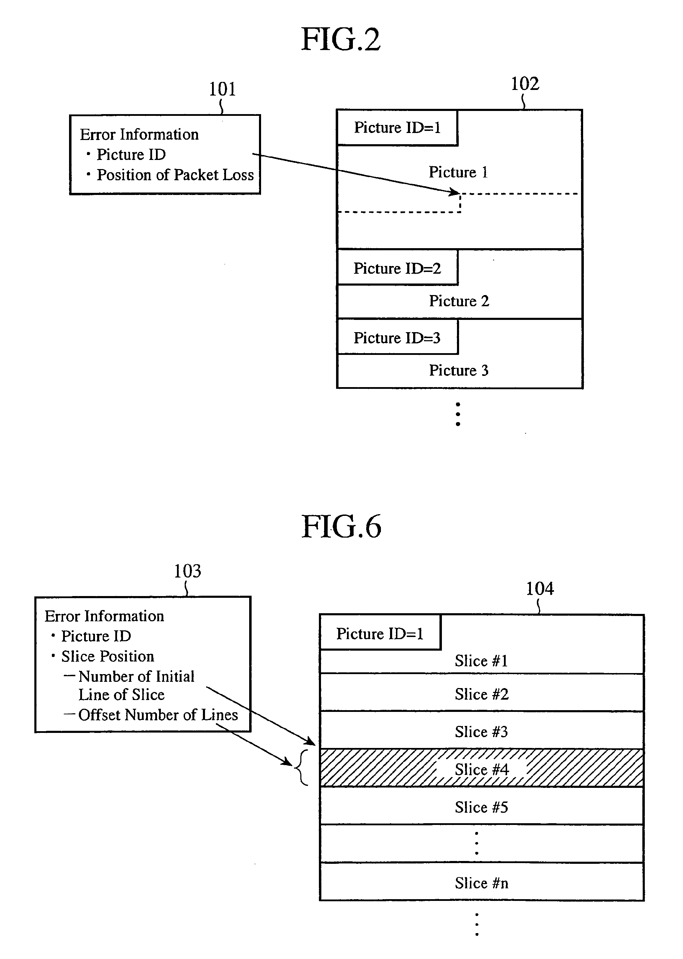

The details of the error information 101 are shown in Fig. 2. As shown in Fig. 2, the error information 101 can be set up for each picture of the MPEG-2 video ES data 102. More specifically, a picture ID indicating a picture in which a packet loss has occurred, and position information about the position of the packet loss are stored in the error information 101. The media demultiplexing unit 6 transfers the MPEG-2 video ES data 102, the error information 101, a PTS (Presentation Time Stamp), and a DTS (Decoding Time Stamp) to the coded data input unit 8 for each PES packet. Data other than the video data, as well as the error information 101, are transferred to the media multiplexing unit 12 in the form of PES packets or sections.

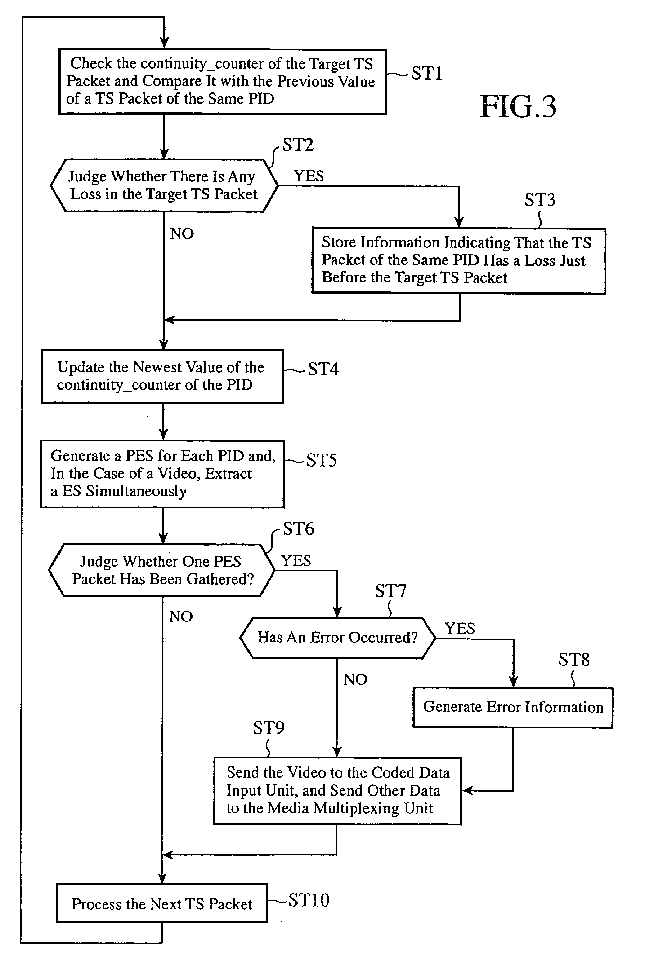

Fig. 3 is a flow chart showing the details of the process of detecting a packet loss which is carried out by the media demultiplexing unit 6 and the error extracting unit 7. Because a plurality of TS packets are stored in the payload of RTP packets, the error extracting unit 7 extracts one of the plurality of TS packets in turn from the leading one of them. The error extracting unit 7 checks the continuity_counter of the extracted TS packet and compares it with that of the previously-extracted TS packet of the same PID (step ST1), and then judges whether or not there is a loss in the plurality of TS packets (step ST2). When, in step ST2, finding out a loss in the plurality of TS packets, the error extracting unit 7 stores information indicating that the error has occurred just before the position of the currently-extracted TS packet (step ST3). The error extracting unit 7 then updates the newest value of the continuity_counter of the PID with the continuity_counter of the currently-extracted TS packet which the error extracting unit has just processed (step ST4). In contrast, when, in step ST2, judging that there is no packet loss only from the comparison of the continuity_counter of the currently-extracted TS packet with that of the previously-extracted TS packet of the same PID, the error extracting unit 7 shifts to step ST4 without performing any process, and then, in step ST4, updates the newest value of the continuity_counter of the PID with the continuity_counter of the currently-extracted TS packet which the error extracting unit has just processed.

The media demultiplexing unit 6 then generates a PES packet for each PID, and, in the case of a video, extracts ES data from the PES packet simultaneously (step ST5). Next, the media demultiplexing unit 6 judges whether one PES packet has been gathered (step ST6), and, after one PES packet is gathered, generates error information (step ST8) when an error has occurred (step ST7) and transfers the ES data and the error information to the coded data input unit 8 in the case of a video, whereas, in the case of another content, the media demultiplexing unit transfers the PES packet and the error information to the media multiplexing unit 12 (step ST9). In contrast, when, in step ST7, no error has occurred, the media demultiplexing unit does not shift to step ST8, but shifts to step ST9 without performing any process. The media demultiplexing unit then, in step ST9, transfers the ES data to the coded data input unit 8 in the case of a video, whereas, in the case of another content, the media demultiplexing unit transfers the PES packet to the media multiplexing unit 12. When, after step ST9 and in step ST6, no PES packet has been gathered, the media demultiplexing unit 6 processes the next TS packet (step ST10) and returns to step ST1.

The coded data input unit 8 transfers the MPEG-2 ES data to the video decoding unit 9 as well as the DTS and the PTS. Simultaneously, the error information 101 set to the picture is transferred to the coded data output unit 11. The video decoding unit 9 decodes the MPEG-2 ES packet, which it has received, at the timing of the DTS, stores the image data in a baseband which are the decoded result in a buffer included in the video decoding unit 9, and transfers the baseband image data to the video encoding unit 10 at the timing of the PTS. The video encoding unit 10 encodes the inputted baseband video data into H.264 video data, and transfers, as coded data in a NAL (Network Abstraction Layer) format, the coded video data to the coded data output unit 11 as well as the DTS, the PTS, and the picture ID. The coded data output unit 11 performs matching of the picture of the received encoded video data with the error information 101 stored in the coded data output unit 11 on the basis of the picture ID, and transfers the coded data, the DTS, and the PTS to the media multiplexing unit 12 and further transfers the error information 101, as well as the coded data, the DTS, and the PTS, to the media multiplexing unit 12 when the error information 101 exists. In this case, the description of the position of the packet loss in the error information 101 is deleted because the coded data have changed.

The media multiplexing unit 12 packetizes the transcoded video coded data into PES packets, and multiplexes these PES packets, and other PES packets and section data which are not transcoded into TS packets. In a case of packetizing H.264 video coded data into PES packets, one picture is stored in one PES packet and the picture ID of one picture stored in one PES packet is continuously managed, too, so that the media multiplexing unit 12 can continuously hold a relation between error information 101 and a picture included in each PES packet. In this case, when multiplexing a PES packet or section data having error information into TS packets, the media multiplexing unit 12 transfers the PES packet (or the section data) and the error information to the error specific information adding unit 13. When packetizing a PES packet (or section data) having error information into TS packets, the error specific information adding unit 13 sets 1 byte of private data to the adaptation field of the header of the leading one of the TS packets. The error specific information adding unit 13 then sets 0x01 as the private data and adds error specific information for enabling a receiver to recognize that the PES packet starting from the leading TS packet has an error to the leading one of the TS packets, and sends the leading one of the TS packets back to the media multiplexing unit 12. The media multiplexing unit 12 multiplexes the TS packets into a TS stream, and transfers the TS stream to the packet generating unit 14. The packet generating unit 14 which has received the TS data, and packetizes each fixed number of TS packets in the TS data into an RTP packet. On the basis of RFC 2250, the packet generating unit 14 sets up each item of the header of the RTP packet. The packet generating unit 14 then transfers the RTP packets which the packet generating unit has generated to the transmitting unit 15.

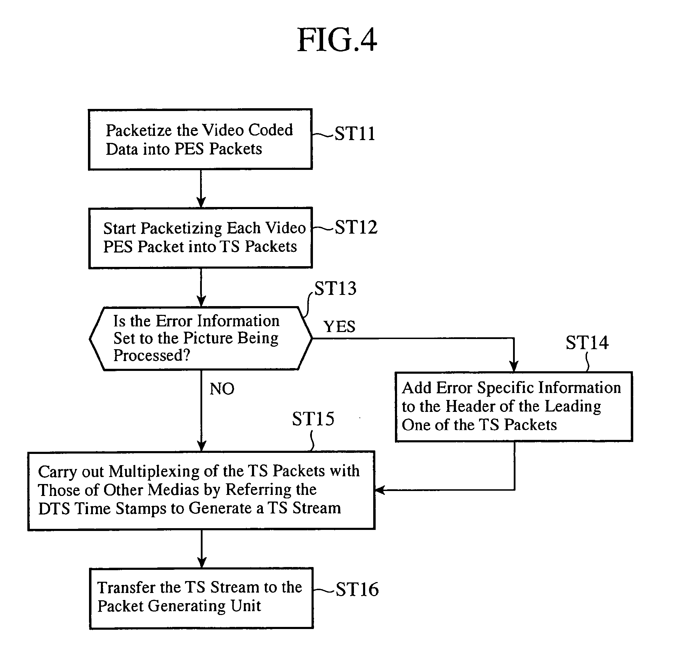

Fig. 4 is a flow chart of a process of setting up error specific information which is carried out by the media multiplexing unit 12 and the error specific information adding unit 13. The media multiplexing unit 12 packetizes the coded data into PES packets in units of pictures (step ST11), and also packetizes each of the video PES packets into TS packets (step ST12). At that time, when the error information 101 has been set to the picture being processed (step ST13), the media multiplexing unit 12 adds error specific information to the header of the leading one of the TS packets (step ST14). Next, the media multiplexing unit 12 performs multiplexing of the TS packets with those of other media by using the DTS time stamp to generate a TS stream (step ST15), and transfers the generated TS stream to the packet generating unit 14 (step ST16). When, in step ST13, no error information 101 has been set to the picture being processed, the media multiplexing unit 12 shifts to step ST15 without performing any process. Also when data other than the video data have error information 101, the media multiplexing unit 12 sets error specific information to the header of the leading one of TS packets into which the data are packetized.

The transmitting unit 15 packetizes each of the RTP packets received into UDP packets and further packetizes each of the UDP packets into IP packets and sends out these IP packets to the network (B) 3 by using the transmission destination address and the port number which are stored in the information for transmission 17.

As previously explained, the transcoder 1 having this structure, when an error has occurred in a stream which it has received before transcoding this stream, can add error specific information indicating that the error has occurred at the time of the reception to an access unit (in the case of a video, a picture) upon which the error at the time of the reception has an influence and transmit the stream after the transcoding. Furthermore, the structure of the transcoder 1 makes it possible to add error specific information to even a medium and a section on which no transcoding is performed when an error occurs at the time of the reception, and transmit them. As a result, a receiver which receives this stream can recognize an access unit which is influenced by an error which has occurred in the stream before the transcoding by referring to the error specific information even if no error has occurred in the received stream, and can therefore take measures against the error, such as a measure of outputting a message to the user, and a measure of displaying a black picture without displaying the video image having fluctuations.

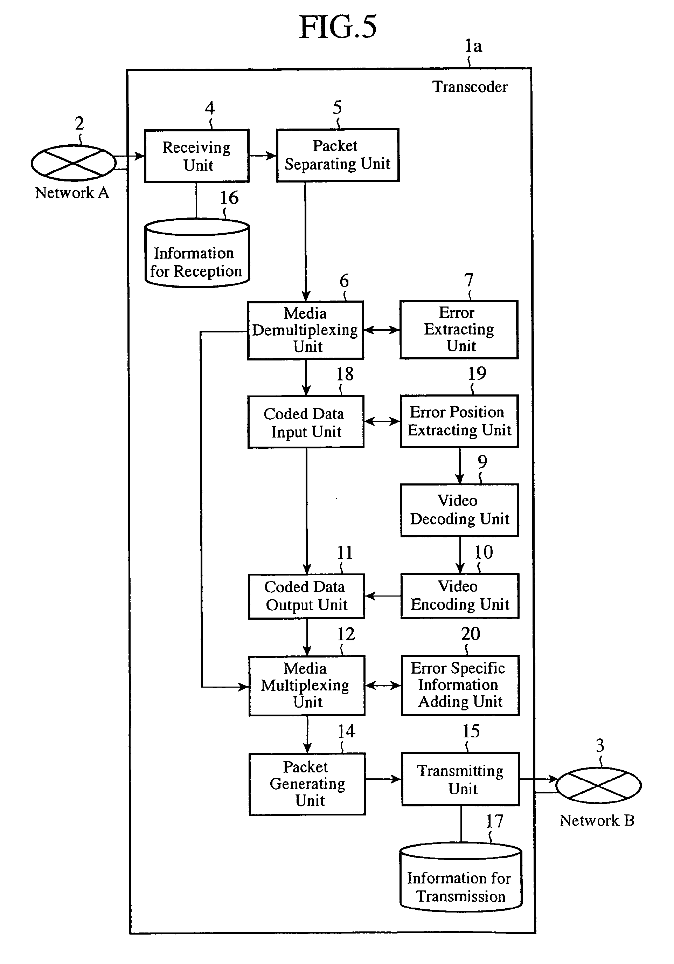

Next, a variant of the transcoder in accordance with Embodiment 1 will be explained. The transcoder 1a of Fig. 5 additionally includes an error position extracting unit 19 in addition to the components of the transcoder 1 of Fig. 1, and includes an error specific information adding unit 20 instead of the error specific information adding unit 13 of the transcoder 1 of Fig. 1, and a coded data input unit 18 whose functions are partially changed from those of the coded data input unit 8 of the transcoder 1 of Fig. 1. More specifically, the error position extracting unit 19 is constructed in such a way as to detect the position of an error in units of each smallest unit to be coded. The coded data input unit 18 is constructed in such a way as to send out error information from the error position extracting unit 19 to the coded data output unit 11. Furthermore, the error specific information adding unit 20 is constructed in such a way as to add the error information to each smallest unit to be coded which is detected by the error position extracting unit 19.

The error specific information is set up in units of each access unit in the transcoder 1, while, in the transcoder 1a, the error specific information is set up in units of each unit having a size smaller than that of each access unit. In a case in which the target content is a video, because the area in which the influence of errors of the video at the time of the reception of the video reaches is closed per slice, it is possible to set position information about the position of a slice in which an error has occurred to the error specific information.

Fig. 6 is a diagram showing the error information which the transcoder 1a uses. As shown in the figure, the error information 103 is set in units of each slice in the MPEG-2 video ES data 104. More specifically, each picture in the MPEG-2 video ES data 104 is divided into a plurality of slices, and slice position information indicating a slice position in a decoded picture is stored in the error information 103. The slice position information specifies in which slice of the decoded picture the error has occurred. In addition, the picture ID stored in the error information 103 is the same as that stored in the error information 101.

In the transcoder 1a, processes including from a process of inputting the video data in the form of IP packets to a process of demultiplexing the input video data into MPEG-2 video ES data in units of each PES packet (in units of each picture) by using the media demultiplexing unit 6 and then inputting the MPEG-2 video ES data to the coded data input unit 18 are the same as those of the transcoder 1. The coded data input unit 18 transmits the MPEG-2 video ES data received, the DTS, the PTS, and the error information 101 (refer to Fig. 2) about an error which has occurred in the picture to the error position extracting unit 19. The error position extracting unit 19 determines the position of a slice in which the error has occurred from both the bit stream of the MPEG-2 video ES data and the error information 101, generates error information 103, and stores the picture ID and the determined slice position. For example, the slice position can be defined as both the number of the initial line of the slice and an offset from the initial line. As an example, in Fig. 6, when each picture is divided into a plurality of slices and an error occurs in a slice #4, the number of the initial line of the slice #4 and the number of offset lines from the initial line to the end position of the slice #4 are set up, as information for specifying the slice #4, in the slice position of the error information 103. The error position extracting unit 19 transfers the error information 103 in which the slice position is set up to the coded data input unit 18. The error position extracting unit 19 also transfers the bit stream of the MPEG-2 video ES data, the DTS, and the PTS to the video decoding unit 9. The coded data input unit 18 transmits the error information 103 to the coded data output unit 11. After that, in the transcoder 1a, only the operation of the error specific information adding unit 20 differs from that of the error specific information adding unit 13, while the operations of the other components are the same as those of the transcoder 1.

Therefore, the operations of the media multiplexing unit 12 and the error specific information adding unit 20 will be shown hereafter. The media multiplexing unit 12 packetizes the transcoded H.264 coded data into PES packets. In the case of packetizing the H.264 coded data into PES packets, one picture is stored in one PES packet and the picture ID of one picture stored in one PES packet is continuously managed, too, so that the media multiplexing unit 12 can continuously hold a relation between the error information 103 and a picture included in each PES packet. The media multiplexing unit 12 transfers each PES packet (or each section) and the error information 103 to the error specific information adding unit 20. When packetizing a PES packet (or a section) having the error information into TS packets, the error specific information adding unit 20, if it is possible to set up more-detailed error information than that set to a access unit in which an error has occurred, adds 4 bytes of private data to, for example, the adaptation field. The error specific information adding unit then sets 0x02 to the head of 1 byte of the data so as to show that it is detailed error specific information. The error specific information adding unit also expresses the area in which the influence of the error reaches with the number (12 bits) of the initial line of the slice and the number of offset lines from the initial line (12 bits) by using the remaining 3 bytes of the data, and sends this data back to the media multiplexing unit 12. In this case, when a plurality of errors exist in one PES, the error specific information adding unit repeatedly stores 3 bytes of data in the adaptation field.

The media multiplexing unit 12 also performs TS multiplexing on the PES packets and sections of a medium which has not been transcoded. When the error information is set up in units of each access unit, the transcoder 1a sets up 1 byte of private data in the adaptation field of the header of the leading one of the TS packets, sets 0x01 as the private data, and adds error specific information for enabling a receiver to recognize that the PES packet starting from the leading TS packet has an error to the TS packets, like the transcoder 1. As a result, as to the video, the transcoder 1a can transmit the error information at the time when receiving the video by specifying the error information in units of each slice which is set to the coded data at the time of the reception, each slice being finer than each access unit. As a result, a receiver which receives this stream can recognize an access unit which is influenced by an error which has occurred in the stream before the transcoding by referring to the error specific information even if no error has occurred in the received stream, and can therefore take measures against the error, such as a measure of displaying a black picture without displaying the video image having fluctuations (in units of each slice before the transcoding).

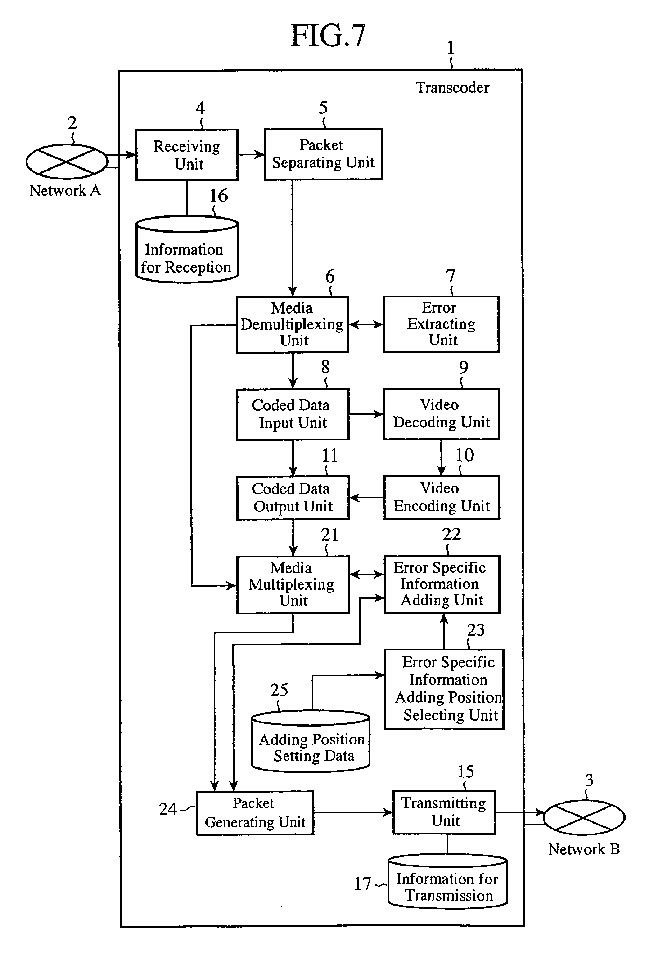

Fig. 7 is a block diagram showing a transcoder which can change the layer to which the error specific information is to be added. The transcoder 1b shown in this figure differs from the transcoder 1 of Fig. 1 in that the transcoder 1b is provided with a media multiplexing unit 21, an error specific information adding unit 22, an error specific information adding position selecting unit 23, a packet generating unit 24, and adding position setting data 25. The adding position setting data 25 are setting data for setting up the layer to which the error specific information is to be added. When the adding position setting data are set as "1", the transcoder 1b adds the error specific information to the TS layer, like the transcoder 1 of Fig. 1. In contrast, when the adding position setting data are set as "2", the transcoder 1b adds the error specific information to the PES layer, and, when the adding position setting data are set as "3", the transcoder 1b adds the error specific information to the RTP layer. The error specific information adding position selecting unit 23 is constructed in such a way as to, when the transcoder 1b is turned on or starts transmitting or receiving a content, read the adding position setting data 25 so as to acquire information indicating to which layer the error specific information is to be added, and notify this information to the error specific information adding unit 22. When "1" is set as the adding position setting data 25, the error specific information adding unit 22 notifies both the media multiplexing unit 21 and the packet generating unit 24 that the error specific information adding unit sets the error specific information to the TS layer. The operation of the transcoder 1b in the case of setting the error specific information to the TS layer is the same as that of the transcoder
1.

When "2" is set as the adding position setting data 25, the error specific information adding unit 22 notifies both the media multiplexing unit 21 and the packet generating unit 24 that the error specific information adding unit sets the error specific information to the header of the PES packet. The media multiplexing unit 21 transfers the PES packet and the error information 101 to the error specific information adding unit 22. The error specific information adding unit 22 stores the error information in the PES private data of the header of the PES packet having the error information 101. The error specific information adding unit uses the head of 1 byte of the private data, and, when an error occurs in the PES packet, sets the head of 1 byte to 0x01.

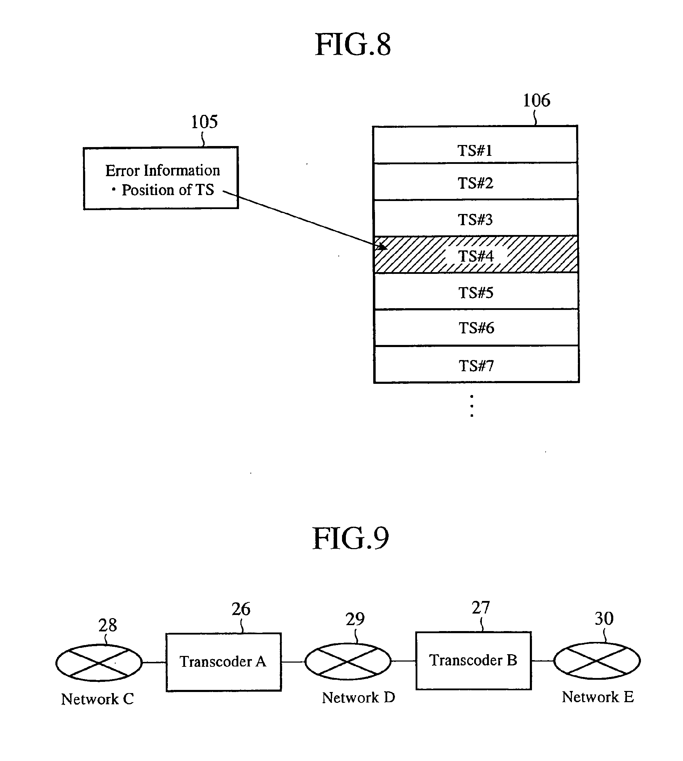

When "3" is set as the adding position setting data 25, the error specific information adding unit 22 notifies both the media multiplexing unit 21 and the packet generating unit 24 that the error specific information adding unit sets the error specific information to the header of the RTP packet. Although the operation of up to packetizing each PES packet into TS packets of the transcoder 1b is the same as that of the transcoder 1, the error specific information adding unit 22 generates no error specific information for both the TS packet header and the PES packet header when packetizing each PES packet which it has received from the media multiplexing unit 21 into TS packets. The media multiplexing unit 21 adds the error information 105 to each TS packet in which the head of a picture including an error is stored, and transmits this TS packet to the packet generating unit 24. Fig. 8 is an explanatory drawing showing an example of the error information 105. As shown in the figure, the error information 105 is set up in such a way as to specify one TS packet included in a series of TS packets 106. More specifically, in order to indicate which TS packet of the series of TS packets 106 stored is the leading one of the TS packets of the access unit having an error, the error information 105 stores the number of packets including from the leading one of the plurality of TS packets which are transmitted at a time from the media multiplexing unit 21 to the packet generating unit 24 up to the leading packet of the access unit having an error.

The packet generating unit 24 which has received the TS packets 106 and the error information 105 generate an RTP packets by storing the TS packets 106 in the payload of the RTP packet. At that time, when storing the TS packets 106 in which the error information 105 exists in the payload of the RTP packet, the packet generating unit 24 turns on the Extension bit of the RTP header of the RTP packet and sets the error specific information to the extended header of the RTP packet. The packet generating unit further stores the number of the pieces of error specific information stored in the first byte of the extended header of the RTP packet, and then stores information indicating how manieth TS packet from the head of the RTP payload the leading one of the TS packets having an error is in the extended header of the RTP packet. The extended header is extended in units of 32 bits, and the number of the pieces of error specific information stored is notified using the information which is 1 byte of the head of the extended header. As a result, the transcoder 1b can change the layer in which the error specific information is set up to the layer set for the adding position setting data, and can therefore set up the error specific information in a layer which a receiver which receives the stream can process.

In this embodiment, the transcoder generates error specific information about a picture for which it has detected an error at the time when receiving the picture, and then adds the error specific information to the stream transcoded, as previously explained. The area in which the influence of this error is exerted upon the video image changes according to the type of a picture in which the error has occurred of the video image which is yet to be transcoded. Therefore, it is possible to add not only the occurrence of the error but also information about a time at which the influence of the error upon the video image ends to the error specific information. For example, when the picture in which the error has occurred is a B picture, the error affects only the picture. However, when the picture in which the error has occurred is an I or P picture, the influence of the error reaches even the video image including pictures before the next I picture. Therefore, by providing the following three types of error specific information:
(1) Error specific information indicating an error which affects only the picture;
(2) Error specific information indicating an error which affects subsequent pictures; and
(3) error specific information indicating the end of the influence of the error upon the video image, the transcoder in accordance with this embodiment enables the receiver to limit a time period during which the receiver replaces the video image having an error with another image without displaying the video image to only a time period during which the video image include fluctuations.

As mentioned above, the transcoder in according with Embodiment 1, which transcodes a medium stream which the transcoder has received from one network, and sends out the transcoded medium stream to another network, includes: the error extracting unit for detecting occurrence of an error in the medium stream received, and for determining the position of the occurrence; and the error specific information adding unit for adding error specific information for notifying that the error has occurred before the transcoding to an access unit on which the transcoding has been performed, the access unit corresponding to the medium stream in which the error has occurred at the time of the reception. Therefore, the transcoder makes it possible for a receiver to detect that the medium data have abnormalities, and to carry out display of a message for the user, replacement of the medium having fluctuations with another image, and so on.

Furthermore, in the transcoder in accordance with Embodiment 1, the error specific information adding unit adds the error specific information in units of each smallest unit to be coded. Therefore, the transcoder makes it possible for a receiver to take more detailed measures against errors, such as to carry out replacement of the medium having fluctuations with another image in units of each smallest unit.

In addition, the transcoder in accordance with Embodiment 1 includes the error specific information adding position selecting unit for selecting a layer to which the error specific information is to be added on the basis of information for setting up the layer to which the error specific information is to be added, and the error specific information adding unit adds the error specific information to the layer selected by the error specific information adding position selecting unit. Therefore, the transcoder can arbitrarily specify a layer to which the error specific information is added.

### Embodiment 2.

Embodiment 2 is aimed at a system which performs transcoding by using a plurality of transcoders. In the transcoding using a plurality of transcoders, assume a case in which, for example, a first transcoder performs a transcoding process of changing the transmission rate of an MPEG-2 video inputted to the system and a second transcoder converts the MPEG-2 video into an H.264 video. Because a portion related to the present invention is not greatly influenced by coding methods which are used before and behind the transcoding, and so on, only the second transcoder will be explained hereafter in this embodiment. In other words, the first transcoder differs from the second transcoder in only its coding method and the portion related with the present invention of the first transcoder can be implemented by the same structure as that of the second transcoder. A method of storing a TS stream which the system receives and transmits in IP packets is the same as that of Embodiment 1.

In this system, a plurality of transcoders are connected to the system, and the two transcoders (A) 26 and (B) 27 are connected to each other by using networks (C) 28, (D) 29, and (E) 30, as shown in Fig. 9. In this case, the network (C) 28, the network (D) 29, and the network (E) 30 can be an identical network. In this system configuration, while an MPEG-2 video stream is inputted to the system and then reaches a receiver, the transcoder (A) 26 performs a transcoding process of changing the transmission rate of the MPEG-2 video stream and the transcoder (B) 27 performs a coding conversion process of changing the MPEG-2 video stream into an H.264 video stream, so that the terminal can receive the transcoded stream.

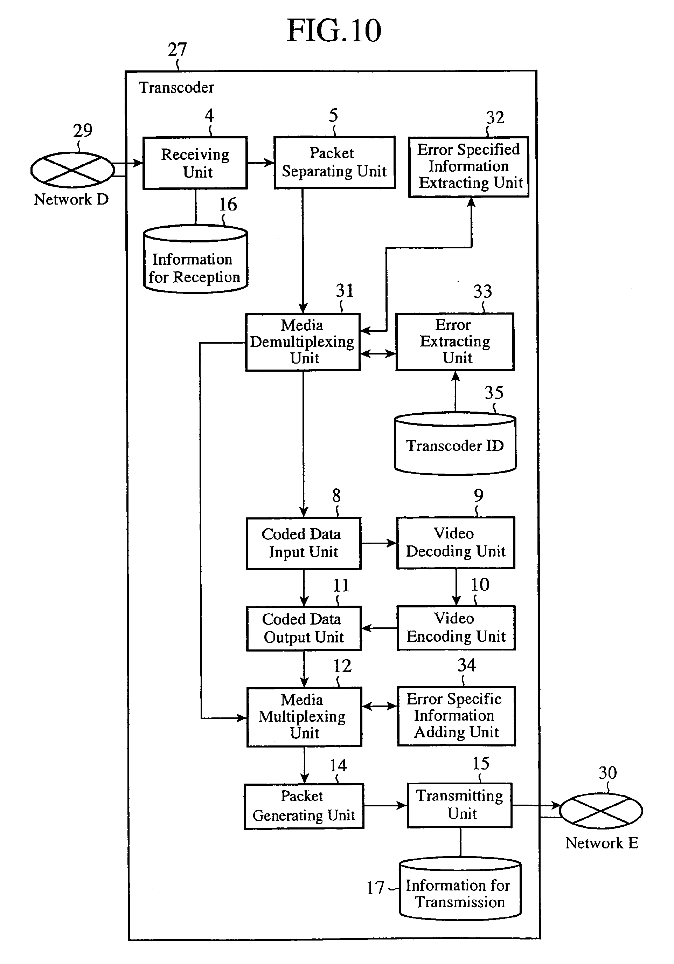

Fig. 10 shows the second transcoder (B) 27 of Fig. 9 which is provided as a transcoder which supports a case in which the error specific information has been already stored when a receiver receives the stream which is transcoded by using the plurality of transcoders. Hereafter, the transcoder (B) 27 will be explained simply as a transcoder 27. The transcoder 27 of Fig. 10 differs from the transcoder 1 shown in Fig. 1 in that the transcoder 27 includes a media demultiplexing unit 31, an error specific information extracting unit 32, an error extracting unit 33, an error specific information adding unit 34, and a transcoder ID 35. The same components as those shown in Embodiment 1, other than the above-mentioned components, are designated by the same reference numerals as those shown in Fig. 1, and the explanation of the components will be omitted hereafter. The error specific information which the transcoder 27 handles is stored in the TS packet layer, as in the case of the transcoder 1, so that an access unit having an error can be identified from the error specific information. In order to make it possible to specify a transcoder in which an error has occurred, the error specific information which is stored in the TS header does not store a flag indicting the occurrence of the error, but stores the transcoder ID 35 indicating the transcoder in which the error has occurred. For example, when the transcoder ID is data of 1 byte, the system sets 1 byte of private data to the adaptation field of the header of a TS packet which stores the head of a PES packet in which the error has occurred so as to set up the transcoder ID to make it possible to identify the transcoder in which the error has occurred.

The media demultiplexing unit 31 has a function of communicating with both the error specific information extracting unit 32 and the error extracting unit 33 in addition to the functions of the media demultiplexing unit 6 of Embodiment 1. The error specific information extracting unit 32 is a functional unit which identifies in which transcoder an error has occurred on the basis of the error specific information. The error extracting unit 33 is constructed in such a way as to, when an error has occurred in the transcoder in which the error extracting unit is included, notify the media demultiplexing unit 31 of the transcoder ID 35 as the error information. Furthermore, the error specific information adding unit 34 is constructed in such a way as to add the transcoder ID as the error information.

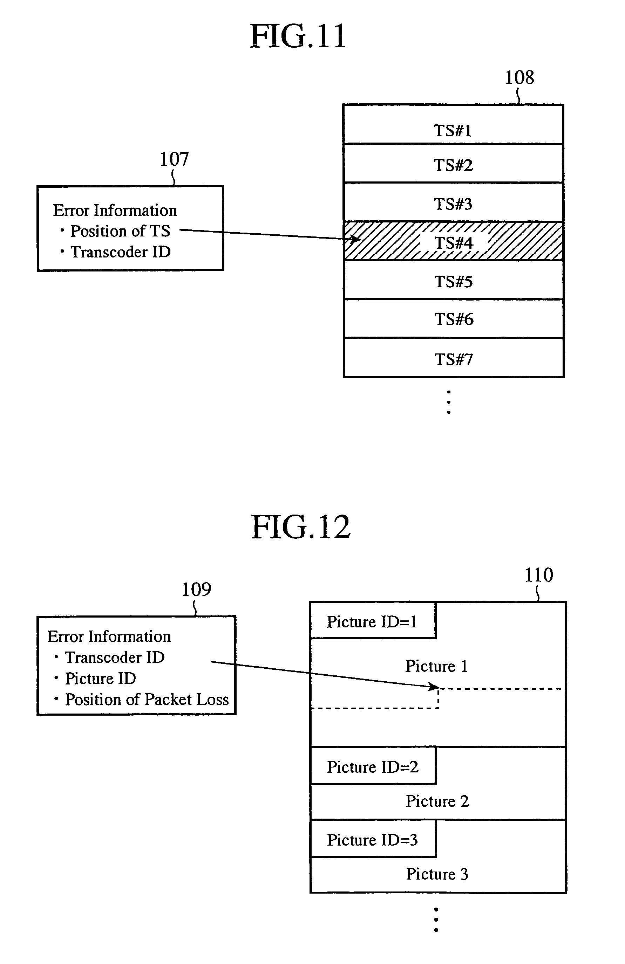

Next, the operation of each of the components will be explained. The components designated by the same reference numerals as those which denote the components of the transcoder 1 perform the same operations as those of the transcoder 1, respectively, and the explanation of the components will be omitted hereafter. When the TS data transferred to the media demultiplexing unit 31 are inputted to the error specific information extracting unit 32, the error specific information extracting unit 32 extracts the error specific information already stored in the TS data, generates error information 107, and transmits this error information 107 to the media demultiplexing unit 31. The error information 107 in the transcoder 27 is shown in Fig. 11. As shown in Fig. 11, the error information 107 is set up for each TS packet. In addition to the error information 105 whose description is shown in Fig. 8, the error information 107 has a transcoder ID to make it possible to identify in which transcoder has received the stream in which the error has occurred.

Next, the media demultiplexing unit 31 transmits the TS stream to the error extracting unit 33. The error extracting unit 33 extracts errors included in the TS stream by using the same method as that which the error extracting unit 7 uses, and sends both information indicating the presence or absence of errors and the transcoder ID of the transcoder itself back to the media demultiplexing unit 31. In this case, the error extracting unit 33 acquires its own transcoder ID from the transcoder ID 35. The media demultiplexing unit 31 demultiplexes the TS stream into PES packets for each medium, extracts MPEG-2 video ES data from each PES packet, and generates error information 109 according to both the error information 107 acquired from the error specific information extracting unit 32 and a return value of the error extracting unit 33. The error information 109 is shown in Fig. 12. As shown in Fig. 12, the error information 109 is set up for each picture in the MPEG-2 ES data 110. In addition to the error information 101 whose description in shown in Fig. 2, the transcoder ID of the transcoder in which an error has occurred at the time of the reception of the TS stream is added to the error information 109. The media demultiplexing unit 31 transmits the MPEG-2 ES data 110, the extracted error information 109, the DTS, and the PTS to the coded data input unit 8. The subsequent operation of the media demultiplexing unit is the same as that of the transcoder 1.

Next, the operation of the error specific information adding unit 34 which is different from that of the transcoder 1 will be explained. The media multiplexing unit 12 transfers both the error information 109 and the PES stream to the error specific information adding unit 34. When the error information 109 exists, the error specific information adding unit 34 sets 1 byte of private data to the adaptation field of the header of a TS packet which stores the head of the PES packet having the error information 109, and also sets the transcoder ID included in the error information 109 as the error specific information. When the error specific information adding unit 34 needs to set a plurality of error data to the same TS header, the error specific information adding unit 34 sets up a required amount of private data for the plurality of error data and stores the error specific information in the private data. After that, the transcoder 27 transmits the stream to a network in the same way that the transcoder 1 does.

As a result, by analyzing the stream which has been transcoded by the plurality of transcoders (A) 26 and (B) 27, a receiver which has received the stream can acquire the error specific information for specifying an error which has occurred in the receiving unit of either of the plurality of transcoders while identifying the either one of the plurality of transcoders. Therefore, the receiver which has received the stream can acquire information indicating in which one of the plurality of transcoders the error has occurred, and can therefore display a more-detailed message for the user.

As mentioned above, in each transcoder in accordance with Embodiment 2, when detecting the occurrence of an error, the error extracting unit specifies identification information identifying the transcoder in which the error extracting unit is included, and the error specific information adding unit adds the identification information identifying the transcoder which is specified by the error extracting unit. Therefore, even in a case in which the stream goes via a plurality of transcoders, the system can add the error specific information which is set up for each transcoder to the stream.

### Embodiment 3.

In Embodiment 3, a transcoder which receives a ground digital television broadcast wave, transcodes MPEG-2 video data to H.264 video data, and transmits this H.264 video data to an IP network. In this embodiment, a method of, when transmitting a TS stream to a network, storing the TS stream in IP packets is the same as that used in Embodiment 1.

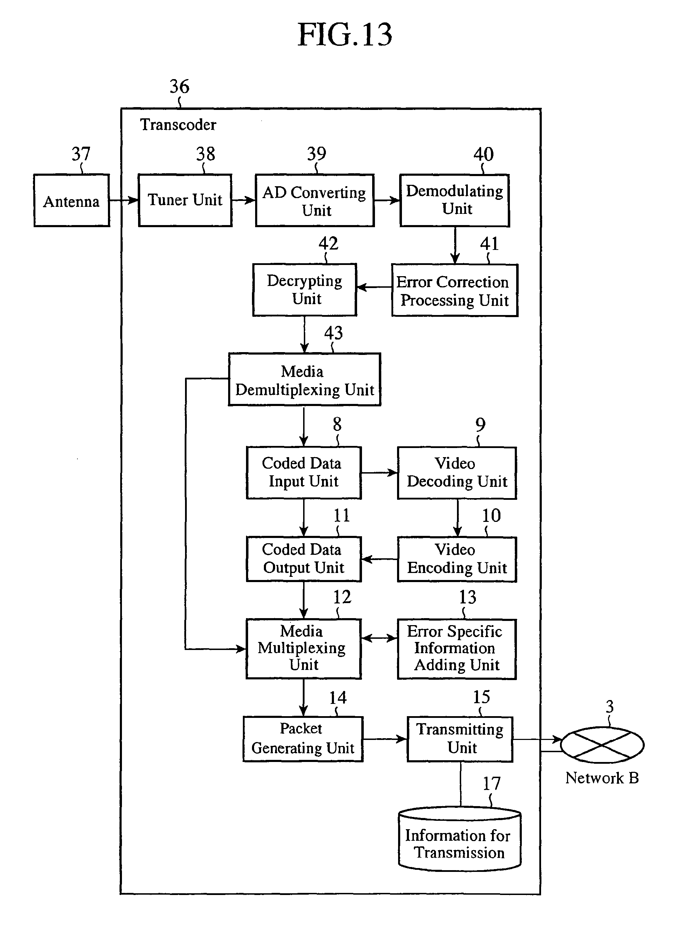

Fig. 13 shows a transcoder 36 which receives a ground digital television broadcast wave, transcodes MPEG-2 video data to H.264 video data, and transfers the H.264 video data to an IP network. In this embodiment, the transcoder 36 differs from the transcoder 1 of Embodiment 1 in that the transcoder 36 includes an antenna 37, a tuner unit 38, an AD conversion unit 39, a demodulating unit 40, an error correction processing unit 41, a decrypting unit 42, and a media demultiplexing unit 43. The same components as those shown in Embodiment 1, other than the above-mentioned components, are designated by the same reference numerals as those shown in Fig. 1, and the explanation of the components will be omitted hereafter.

The transcoder 36 of Embodiment 3 receives ground digital television broadcast waves by using the antenna 37. The broadcast waves which the transcoder 36 has received are inputted to the tuner unit 38, and the tuner unit 38 sends out a broadcast wave about a channel which the tuner unit selects to the AD conversion unit 39. The AD conversion unit 39 converts the received signal into a digital signal, and sends out this digital signal to the demodulating unit 40. The demodulating unit 40 performs demodulation and decoding, such as QPSK, 16QAM, or 64QAM, TMCC decoding, and deinterleaving on the digital signal so as to convert the digital signal into a TS stream, and sends out this TS stream to the error correction processing unit 41. The error correction processing unit 41 performs Reed-Solomon decoding on the TS stream inputted thereto, and performs an error correction and error detection on the decoded TS stream. When detecting an error, because the error correction processing unit 41 can specify a TS packet in which the error has occurred, the error correction processing unit 41 generates error information 105 as shown by Fig. 8. The error correction processing unit 41 outputs both the TS stream and the error information 105 to the decrypting unit 42, and the decrypting unit 42 which has received both the TS stream and the error information 105 transfers both the TS data and the error information 105 which it has decrypted to the media demultiplexing unit 43. The media demultiplexing unit 43 demultiplexes the TS packets into PES packets and sections which are multiplexed into the TS packets, and further generates MPEG-2 ES data. The media demultiplexing unit 43 converts the error information 105 into error information 101 showing the position of a packet loss in the ES data which is stored in the payload of the corresponding TS (refer to Fig. 2). The MPEG-2 ES data are transferred to the coded data input unit 8 as well as the error information 101, the DTS, and the PTS, and data about other media are transferred to the media multiplexing unit 12. The subsequent processing is the same as the processing carried out by the coded data input unit 8 and the components in the backward stages of the coded data input unit in the transcoder 1.

As mentioned above, the transcoder in accordance with Embodiment 3 can store information about an error which exists in a received stream when receiving this stream in the video stream which the transcoder has transcoded and can transmit the video stream to an IP network even though the transcoder is of type which receives a ground digital television broadcast wave, converts a MPEG-2 video to an H.264 video, and transmits the H.264 video to an IP network. As a result, a receiver which receives this stream can recognize an access unit which is influenced by an error which has occurred in the stream before the transcoding by referring to the error specific information even if no error has occurred in the received stream, and can therefore take measures against the error, such as a measure of outputting a message indicating that an error has occurred in the broadcast wave to the user, and a measure of displaying a black picture without displaying the video image having fluctuations.

### Embodiment 4.

In Embodiment 4, a transcoder 44 which receives and transmits a medium via an IP network without multiplexing it with other media. For example, the transcoder 44 converts an MPEG-2 video coded stream which it has received into an H.264 video stream. The transcoder 44 uses an RTP for transmission of a medium, and the RTP complies with RFC3550. As the transmission format of the MPEG-2 video, a method of storing MPEG-2 ES data which comply with RFC2250 in RTP packets is used. RFC3984 is used as the transmission format of H.264.

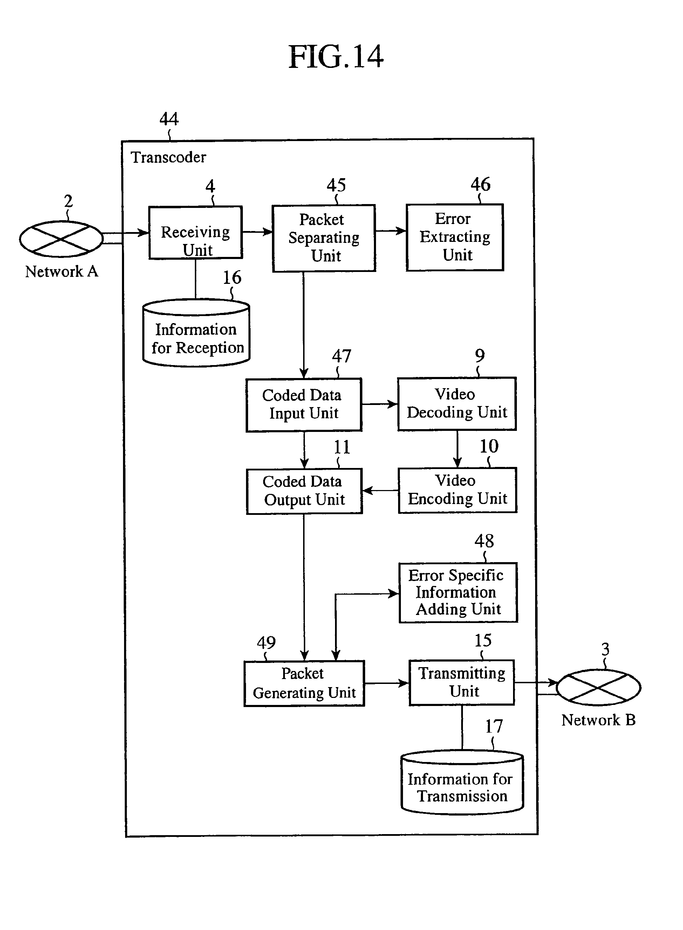

Fig. 14 is a block diagram showing the transcoder 44 which receives and transmits a medium via an IP network without multiplexing it with other media. The transcoder 44 shown in the figure differs from the transcoder 1 of Embodiment 1 in that the transcoder 44 includes a packet separating unit 45, an error extracting unit 46, a coded data input unit 47, an error specific information adding unit 48, and a packet generating unit 49. The same components as those shown in Embodiment 1, other than the above-mentioned components, are designated by the same reference numerals as those shown in Fig. 1, and the explanation of the components will be omitted hereafter.

In the transcoder 44 of Embodiment 4, RTP packets are transferred from the receiving unit 4 to the packet separating unit 45. The receiving unit 4 checks a checksum in a UDP layer, and does not transmit any packet in which a checksum error has occurred to the packet separating unit 45. Therefore, an RTP packet in which a checksum error has occurred is handled in an RTP layer in the same way that a packet loss is handled. When receiving RTP packets, the packet separating unit 45 performs buffering of a fixed amount of RTP packets in order to absorb jitter in the IP network. At that time, if the RTP packets are received out of order, the packet separating unit 45 sorts the out-of-order RTP packets in the correct order by using their RTP sequence numbers. The packet separating unit 45 transmits the RTP headers of the RTP packets which it has received to the error extracting unit 46 after completing the buffering.

The error extracting unit 46 checks the sequence numbers of the RTP headers of the RTP packets, and, when they do not follow the sequence numbers of the RTP packets which the receiver received the last time, judges that a packet loss has occurred in the currently-received RTP packets and answers the result to the packet separating unit 45. When the sequence numbers of the RTP headers of the currently-received RTP packets follow those of the RTP packets which the transcoder received the last time, the error extracting unit 46 judges that no packet loss has occurred in the currently-received RTP packets. The packet separating unit 45 separates the payload from each of the RTP packets and generates MPEG-2 ES data. The packet separating unit 45 stores the time stamp of the RTP header of each of the RTP packets in a PTS, and, in the case of a B picture, stores the same time stamp as that stored in the PTS in a DTS, whereas, in the case of an I or P picture, stores the PTS of the immediately preceding I or P picture in the DTS. In this case, assume that a break between two adjacent pictures is detected with a change point in their RTP time stamps, and a distinction among I, P, and B pictures is recognized using the Picture Coding Type of the picture header stored in each break between two adjacent pictures. When receiving a response indicating that an error has occurred in the RTP packets from the error extracting unit 46, the packet separating unit 45 generates error information 101 as shown in Fig. 2. The packet separating unit 45 sends out the MPEG-2 ES data, the error information 101, the PTS, and the DTS to the coded data input unit 47. The coded data input unit 47 receives the MPEG-2 ES data, the error information 101, the PTS, and the DTS. After that, the transcoder 44 performs transcoding on the MPEG-2 video data to transcode the MPEG-2 video data to H.264 video data in the same way that the transcoder 1 does.

When the error information 101 exists together with the coded data, the DTS, and the PTS, the coded data output unit 11 transfers the error information 101 to the packet generating unit 49. The packet generating unit 49 stores the PTS in the time stamp of the RTP header, increments the previous sequence number to generate a sequence number, turns on the M bits of the packet at the end of the picture, and stores the ES data in the payload to generate an RTP packet. When the RTP packet stores the leading ES data of the picture and the error information 101 exists in the picture, the packet generating unit 49 transfers the RTP packet to the error specific information adding unit 48. When receiving the RTP packet and the error information 101, the error specific information adding unit 48 converts the RTP packet into an RTP packet in which error specific information is stored. The error specific information adding unit 48 stores the error specific information in the RTP packet by using a header which is an extension of an RTP header. The error specific information adding unit 48 turns on the Extension bit of the RTP header and sets the error specific information to the extended header of the RTP packet. Assume that the error specific information is expressed by 1 byte of data and stores 0x01. The extended header can be extended in units of 32 bits. The generated RTP packet is transferred from the packet generating unit 49 to the transmitting unit 15, and is then transmitted to the network (B) 3.

As mentioned above, in the transcoder in accordance with Embodiment 4, the error specific information adding unit adds the error specific information into the RTP packet header. Therefore, the transcoder can also transmit information about an error which has occurred when receiving a stream of a medium which is transmitted in the form of RTP packets without being multiplexed with other media, as well as the stream which the transcoder has transcoded. As a result, a receiver which receives this stream can recognize an access unit which is influenced by an error which has occurred in the stream before the transcoding by referring to the error specific information even if no error has occurred in the received stream, and can therefore take measures against the error, such as a measure of outputting a message, and a measure of displaying a black picture without displaying the video image having fluctuations.

### Embodiment 5.

In this embodiment, a receiver which receives both a multimedia stream and error specific information which are transmitted from the transcoder 1 of Fig. 1 will be explained. The video stream is multiplexed into an MPEG-2 TS, as in the case of Embodiment 1, and this embodiment uses a method of storing TS packets in IP packets which is the same as that used in Embodiment 1.

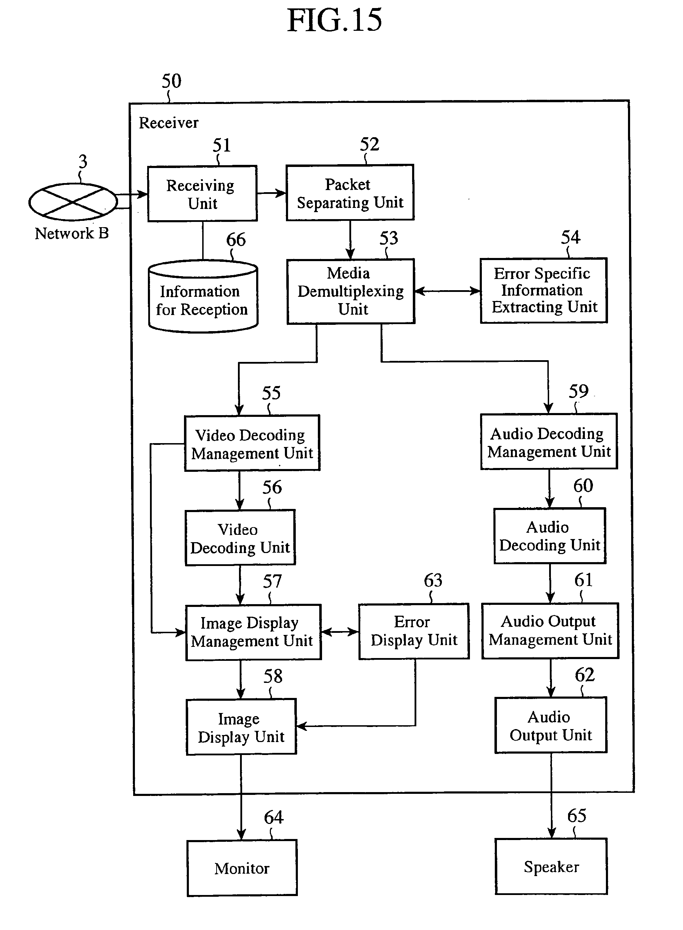

Fig. 15 is a block diagram showing the receiver 50 which can receive a stream to which error specific information is added. The receiver 50 shown in this figure is provided with a receiving unit 51, a packet separating unit 52, a media demultiplexing unit 53, an error specific information extracting unit 54, a video decoding management unit 55, a video decoding unit 56, a video display management unit 57, a video display unit 58, an audio decoding management unit 59, an audio decoding unit 60, an audio output management unit 61, an audio output unit 62, an error display unit 63, a monitor 64, a speaker 65, and information for reception 66.

The receiving unit 51 receives a multimedia stream from an IP network (B) 3 using both a transmission source address and a port number which are set to the information for reception 66. The receiving unit 51 performs processing about an IP layer and a UDP layer, and transmits RTP packets to the packet separating unit 52. The packet separating unit 52 performs buffering of a fixed amount of RTP packets in order to absorb jitter in the IP network. At this time, if the RTP packets are received out of order, the packet separating unit 52 sorts the out-of-order RTP packets in the correct order by using their RTP sequence numbers. After completing the buffering, the packet separating unit 52 deletes their RTP headers and extracts the TS stream stored in the payload of the RTP packets. The extracted TS stream is outputted to the media demultiplexing unit 53.

The media demultiplexing unit 53 demultiplexes the inputted TS stream. After demultiplexing the inputted TS stream into TS packets, the media demultiplexing unit 53 transfers the TS packets to the error specific information extracting unit 54. The error specific information extracting unit 54 extracts error specific information by searching for 1 byte of private data which can be stored in the adaptation field of the header of each of the TS packets, and, when error specific information is stored in a TS packet, notifies the media demultiplexing unit 53 that the error specific information is stored in the TS packet. The media demultiplexing unit 53 demultiplexes the TS packets to generate PES packets for each medium. The media demultiplexing unit 53 further extracts H.264 NAL data about a video from the PES packets. In this case, the media demultiplexing unit 53 checks the H.264 NAL data, recognizes pictures by, for example, searching for access unit delimiters, adds an ID to each picture, and generates error information 111 for a picture in which an error has occurred.

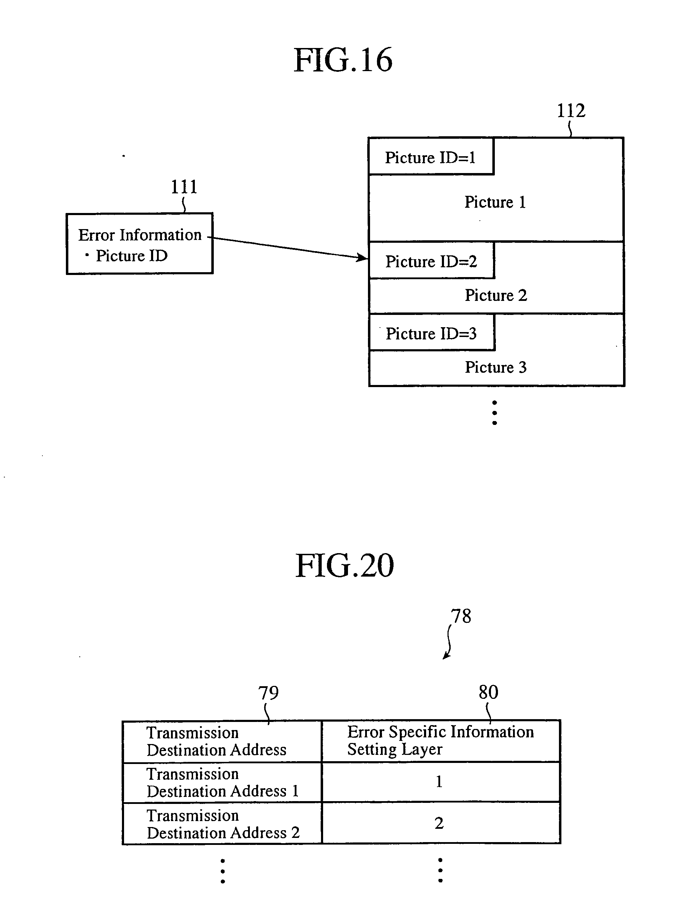

An example of the error information 111 is shown in Fig. 16. As shown in Fig. 16, the error information 111 is set in units of each picture included in the H.264 NAL data 112. More specifically, the picture ID of the target picture is stored in the error information 111. The media demultiplexing unit 53 transfers the demultiplexed H.264 NAL data, the DTS, and the PTS to the video decoding management unit 55, and, when the error information 111 exist, also transfers the error information 111 to the video decoding management unit 55. The media demultiplexing unit 53 further transfers the audio ES data, as well as the DTS and the PTS, to the audio decoding management unit 59. The video decoding management unit 55 sends out each NAL data to the video decoding unit 56 at the timing defined by the DTS. The video decoding management unit 55 simultaneously transmits the error information 111 added to the inputted picture and the PTS to the video display management unit 57 after adding the picture ID to them. The video display management unit 57 receives the picture ID, the error information 111, and the PTS from the video decoding management unit 55, and manages them. When the video data decoded by the video decoding unit 56 are outputted, the video display management unit 57 refers to the picture ID of the video data, and searches for the related PTS and the error information 111.

When the error information 111 corresponding to the picture ID does not exist, the video display management unit 57 outputs the video data to the video display unit 58 according to the PTS, and the video display unit 58 displays the video data on the monitor 64. In contrast, when the error information 111 corresponding to the picture ID exists, the video display management unit 57 transfers the video data to the video display unit 58 and transmits a command for displaying occurrence of a retransmission error to the error display unit 63. The error display unit 63 which has received this command instructs the video display unit 58 to perform display of a message indicating that an error had occurred in the network at the time when the transcoder received the stream.

The audio decoding management unit 59 extracts audio coded data from the audio PES packets and transfers them to the audio decoding unit 60. The audio decoding unit 60 outputs the decoded audio data to the audio output management unit 61. The audio output management unit 61 outputs the audio data to the audio output unit 62 at the timing which is calculated from the sampling frequency of the audio, and the audio output unit 62 plays back the audio and outputs this audio from the speaker 65. Actually, although a mechanism for playing back the audio and the video while maintaining the synchronization between them is required, the synchronous playback of this receiver is not directly related to the scope of the present invention and therefore the explanation of the mechanism will be omitted hereafter. Thereby, the receiver can notify the user that the cause of fluctuations in the video is the state of the network before the transcoding by using a message.

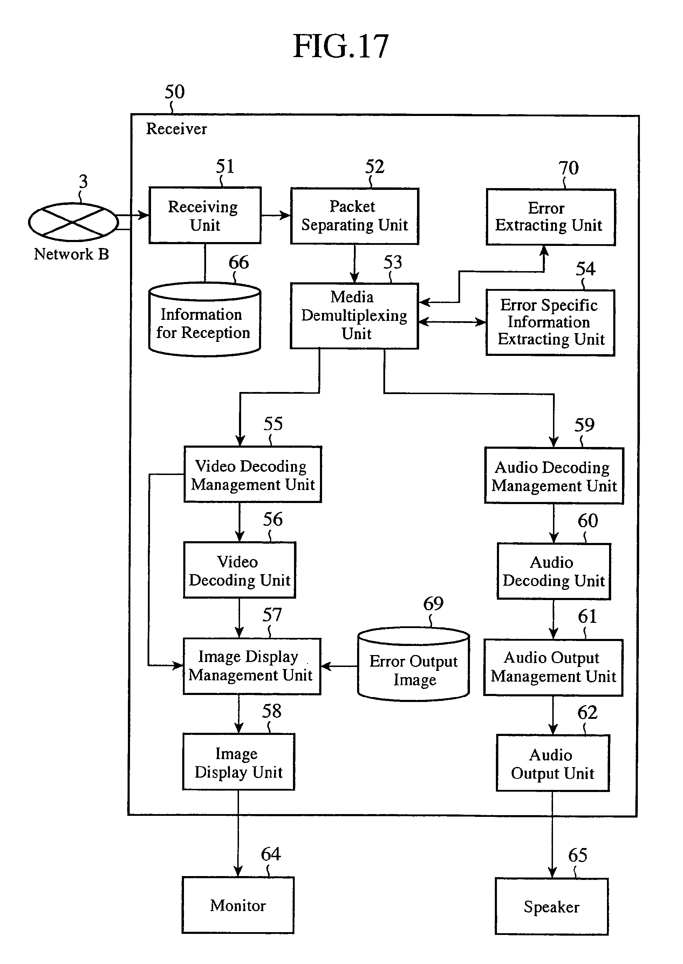

Fig. 17 is a block diagram showing a receiver which can display another image without displaying the video in a case in which an error has occurred at the time when the transcoder receives the video. The receiver 67 shown in this figure differs from the receiver 50 of Fig. 15 in that the receiver 67 includes a video display management unit 68, an error output image 69, an error extracting unit 70, and a media demultiplexing unit 71. The same components as those shown in Fig. 15, other than the above-mentioned components, are designated by the same reference numerals as those shown in Fig. 15, and the explanation of the components will be omitted hereafter.

In the receiver 67, the processes carried out by up to the video decoding unit 56 are the same as those carried out by the receiver 50, with the exception that the media demultiplexing unit 71 delivers the TS packets to the error extracting unit 70, and the error extracting unit 70 checks their continuity_counters and notifies the presence or absence of a packet loss in the received data to the media demultiplexing unit 71. When a packet loss has occurred in the received data, the media demultiplexing unit 71 generates error information 111 (refer to Fig. 16), as in the case in which error specific information is extracted. The video display management unit 68 transmits the decoded picture to the video display unit 58 at the timing defined by the PTS. When the error information 111 is added to the decoded picture, the video display management unit 68 discards the decoded picture and, instead, displays an image stored in the error output image 69 for a fixed time period, e.g., for 0.5 seconds. The video display management unit 68 also discards pictures for which PTSs to be outputted reach while displaying the error output image 69, as in the case of the erroneous picture. A black image, a test pattern image, or the like is stored in the error output image 69. In a case in which the following three types of error specific information: (1) error specific information indicating an error which affects only the picture; (2) error specific information indicating an error which affects subsequent pictures; and (3) error specific information indicating the end of the influence of the error upon the video are provided, when receiving the error specific information (1) indicating an error which affects the target picture, the receiver replaces the picture with another image and displays this image, and, when receiving the error specific information (2) indicating an error which affects subsequent pictures, replaces the pictures including the picture immediately preceding reception of the error specific information (3) indicating the end of the influence of the error upon the video with another image and displays this image. Therefore, the receiver can limit a time period during which the receiver replaces the video having an error with another image without displaying the video to only a time period during which the video include fluctuations. As a result, not only when an error occurs in a stream which the receiver has received, but also when an error occurs at a time when a transcoder receives a stream, the receiver makes it possible not to display pictures of the video including fluctuations resulting from the error which has occurred at the time of the transcoder's reception, and can therefore handle display of the video at a time of occurrence of an error in the receiver in common for both the influence of network errors at the time of the reception by the receiver and the influence of network errors at the time of the reception by the transcoder.

As mentioned above, the receiver in accordance with Embodiment 5 receives a medium stream via the network and plays back the medium stream, and has the error specific information extracting unit for detecting error specific information in the medium stream. Therefore, the receiver can detect error specific information in the medium stream, and can therefore detect whether the medium data have abnormalities.

The receiver in accordance with Embodiment 5 further includes the error display unit for, when the error specific information extracting unit detects error specific information, displaying an error message indicating that an error exists in the medium stream which the receiver has received on the basis of the error specific information. Therefore, the receiver can notify the user that the cause of fluctuations in the video is the state of the network before the transcoding by using a message.

The receiver in accordance with Embodiment 5 also includes the video display management unit for, when the error specific information extracting unit detects error specific information, displaying another image which is predetermined instead of displaying a part of the video specified by the error specific information. Therefore, the receiver can display the other image without displaying the part of the video including the error.

### Embodiment 6.

In Embodiment 6, a receiver which can communicate with a transcoder so as to set up a layer in which error specific information is stored, and the transcoder which sets up the layer in which the transcoder stores error specific information on the basis of information about the setting done by the receiver will be explained. In this embodiment, a video stream is multiplexed into an MPEG-2 TS, as in the case of Embodiment 1, and a method of storing TS packets in IP packets which is the same as that used in Embodiment 1 is used.

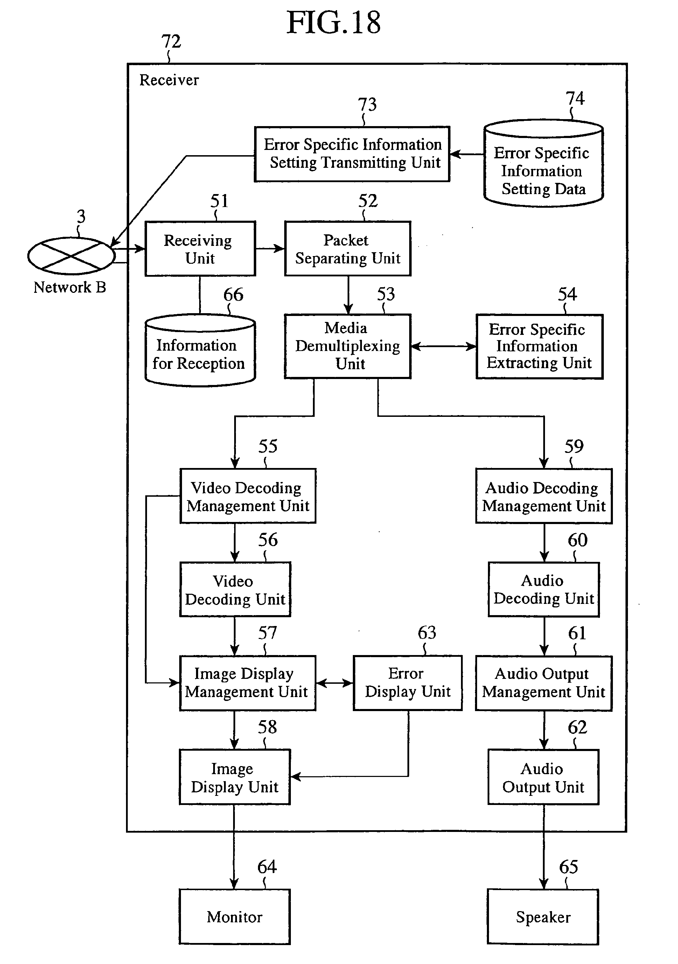

Fig. 18 is a block diagram of the receiver which can communicate with the transcoder so as to set up a layer in which error specific information is stored. The receiver 72 shown in the figure differs from the receiver 50 in accordance with Embodiment 5 shown in Fig. 15 in that the receiver 72 includes an error specific information setting transmitting unit 73 and error specific information setting data 74.

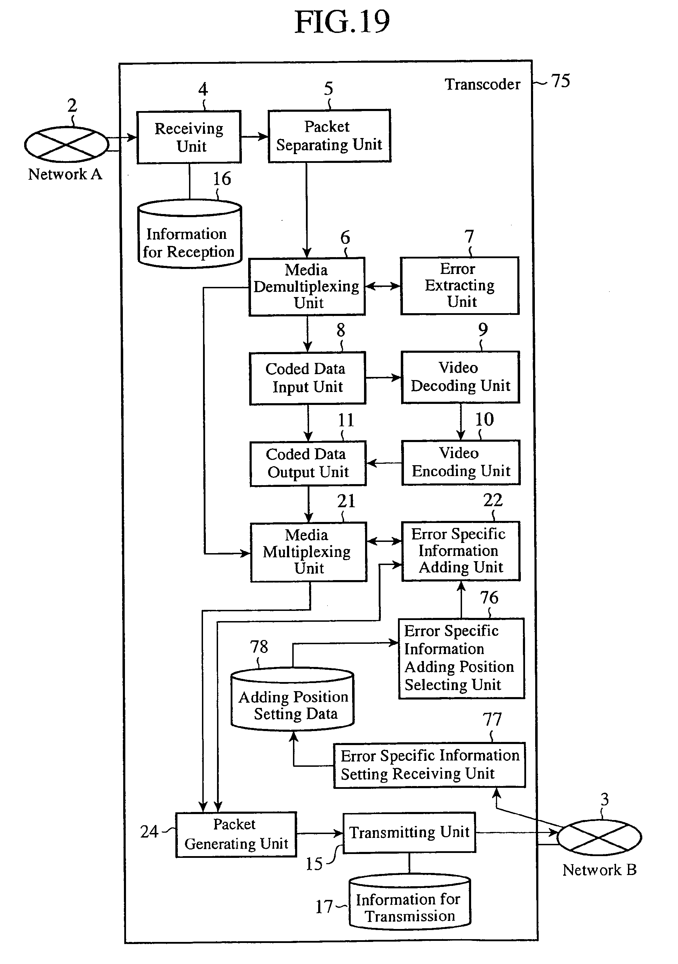

Fig. 19 is a block diagram showing the transcoder which can communicate with the receiver 72 so as to set up the layer in which error specific information is stored. The transcoder 75 shown in this figure differs from the transcoder 1b in accordance with Embodiment 1 shown in Fig. 7 in that the transcoder 75 includes an error specific information adding position selecting unit 76, an error specific information setting receiving unit 77, and adding position setting data 78.

In the error specific information setting data 74 of the receiver 72, the IP address of the transcoder, a port number which the transcoder uses to communicate with the receiver, and layer information about the layer in which error specific information is stored are set up. In this embodiment, three types of layers: a TS layer, a PES layer, and an RTP layer each of which can be used as the layer in which error specific information is stored will be explained. For example, in the case in which the TS layer is used as the layer in which error specific information is stored, the layer information about the layer in which error specific information is stored is set to 1, in the case in which the PES layer is used as the layer in which error specific information is stored, the layer information is set to 2, and, in the case in which the RTP layer is used as the layer in which error specific information is stored, the layer information is set to 3. The error specific information setting transmitting unit 73 of the receiver 72 reads the error specific information setting data 74 and also reads information about the transcoder 75 from which the receiver receives the video stream, and then transmits the layer information about the layer in which the error specific information stored in the error specific information setting data 74 is to be stored by using the TCP (Transmission Control Protocol). When receiving the layer information about the layer in which the error specific information is to be set up from the receiver 72, the error specific information setting receiving unit 77 of the transcoder 75 stores both the address of the receiver 72 and the layer information about the layer in which the error specific information is to be set up in the adding position setting data 78.

The details of the adding position setting data 78 are shown in Fig. 20. As shown in the figure, the adding position setting data 78 show a correspondence between a transmission destination address 79 and an error specific information setting layer 80. The information about the address of the receiver from which the error specific information setting receiving unit 77 has received the data is stored in the transmission destination address 79, and the layer in which the error specific information is to be set up which the receiver has made a request to acquire is stored in the error specific information setting layer 80. When the adding position setting data 78 are updated, the error specific information adding position selecting unit 76 reads the adding position setting data 78. When the transcoder starts transmitting the video stream, the error specific information adding unit 22 instructs the error specific information adding position selecting unit 76 to search for the layer to which the error specific information is to be added with the information about the address of the transmission destination, and determines the layer in which the error specific additional information is to be set up.

As a result, the receiver 72 can specify the layer to which the error specific information is to be added for the transcoder 75 so as to enable the transcoder 75 to set up the error specific information in the specified layer. Therefore, for example, even in a case in which an LSI is used to implement the media demultiplexing unit and the video decoding unit, and it is therefore difficult to add a process of handling the error specific information, a setup of the error specific information in the RTP layer makes it possible for the receiver to acquire the status of occurrence of errors in the video stream before being transcoded.

As mentioned above, the receiver in accordance with Embodiment 6 includes the error specific information setting communication unit for transmitting information for specifying a layer in which error specific information about an error which may occur in the medium stream which the receiver receives is to be stored. Therefore, the receiver can arbitrarily select an layer in which error specific information about an error which may occur in the medium stream which the receiver receives is to be stored.

Furthermore, the transcoder in accordance with Embodiment 6 has the error specific information setting receiving unit for receiving information for setting up a layer to which error specific information is to be added, and the error specific information adding position selecting unit selects the layer on the basis of the information received by the error specific information setting receiving unit. Therefore, the transcoder can set up the layer to which the error specific information is to be added according to the information which it has received.

Many widely different embodiments of the present invention may be constructed without departing from the spirit and scope of the present invention. It should be understood that the present invention is not limited to the specific embodiments described in the specification, except as defined in the appended claims.

## Claims

1. A transcoder (1, 1a, 1b, 27, 36, 44, or 75) which transcodes a medium stream which said transcoder has received from one network, and sends out the transcoded medium stream to another network, **characterized in that** said transcoder comprises:
an error extracting unit (7, 33, 46, or 70) for detecting occurrence of an error in said medium stream received, and for determining a position of the occurrence; and
an error specific information adding unit (13, 20, 22, 34, or 48) for adding error specific information indicating that the error has occurred before said transcoding to an access unit on which said transcoding has been performed, said access unit corresponding to the medium stream in which the error has occurred at a time of the reception.

2. The transcoder according to claim 1, **characterized in that** said error specific information adding unit adds the error specific information in units of each smallest unit to be coded.

3. The transcoder according to claim 1, **characterized in that** said error specific information adding unit adds the error specific information into an RTP packet header.

4. The transcoder according to claim 1, **characterized in that** said error extracting unit specifies identification information about said transcoder itself when detecting occurrence of an error, and said error specific information adding unit adds the identification information about said transcoder itself which is specified by said error extracting unit.

5. The transcoder according to claim 1, **characterized in that** said transcoder includes an error specific information adding position selecting unit (23 or 76) for selecting a layer to which the error specific information is to be added on a basis of information for setting up the layer to which said error specific information is to be added, and said error specific information adding unit adds the error specific information to the layer selected by said error specific information adding position selecting unit.

6. The transcoder according to claim 5, **characterized in that** said transcoder includes an error specific information setting receiving unit (77) for receiving the information for setting up the layer to which the error specific information is to be added, and said error specific information adding position selecting unit selects the layer on a basis of the information received by said error specific information setting receiving unit.

7. A receiver (50, 67, or 72) which receives a medium stream via a network and plays back the medium stream, **characterized in that** said receiver comprises an error specific information extracting unit (54) for detecting error specific information included in said medium stream.

8. The receiver according to claim 7, **characterized in that** said receiver includes an error display unit (63) for, when said error specific information extracting unit detects the error specific information, displaying an error message indicating that an error exists in the received medium stream on a basis of said error specific information.

9. The receiver according to claim 7, **characterized in that** said receiver includes a video display management unit (57 or 68) for, when said error specific information extracting unit detects the error specific information, displaying another image which is determined beforehand instead of displaying a part of a video which is specified by said error specific information.

10. The receiver according to claim 7, **characterized in that** said receiver includes an error specific information setting communication unit (73) for transmitting information specifying a layer in which the error specific information included in the received medium stream is to be stored.
